# EUROPÄISCHE PATENTSCHRIFT

(11) **EP 3 140 062 B1**
(45) Veröffentlichungstag und Bekanntmachung des Hinweises auf die Patenterteilung: **28.02.2024**
(21) Anmeldenummer: 15721670.6
(22) Anmeldetag: 04.05.2015
(51) Int. Cl.: B21J 15/28, B05C 7/04, B21J 15/32, G01N 21/952, G06T 7/00

(54) **VERFAHREN UND ANORDNUNG ZUM PRÜFEN EINES NIETS**
RIVET CONTROL PROCESS AND DEVICE
PROCÉDÉ ET APPAREIL DE CONTRÔLE D'UN RIVET

(30) Priorität: 06.05.2014 DE 102014106312
(43) Veröffentlichungstag der Anmeldung: 15.03.2017
(73) Patentinhaber: Broetje-Automation GmbH, 26215 Wiefelstede (DE)
(72) Erfinder: FICKEN, Wilfried, 26180 Rastede (DE); WOLF, Bernd-Michael, 26180 Rastede (DE)
(74) Vertreter: Gottschald, Jan
(86) Internationale Anmeldenummer: PCT/EP2015/059673
(87) Internationale Veröffentlichungsnummer: WO 2015/169727

(56) Entgegenhaltungen:
- EP-A1- 1 772 199
- DE-A1- 3 917 310
- DE-A1-102013 015 900
- DE-B3-102007 061 803
- DE-U1- 20 215 364
- US-A- 4 823 396

## Beschreibung

Die vorliegende Erfindung betrifft ein Verfahren zum Prüfen eines Niets gemäß dem Oberbegriff von Anspruch 1 und eine Messanordnung zum Prüfen eines Niets gemäß dem Oberbegriff von Anspruch 15.

Bei der Herstellung von Flugzeugstrukturbauteilen sind regelmäßig eine große Zahl von Nietverbindungen herzustellen, wobei die Herstellung dieser Nietverbindungen zunehmend automatisiert durch Nietmaschinen erfolgt, welche von einer Nietbefüllstation - ebenfalls automatisiert - mit Nieten versorgt werden. Dabei werden hohe Anforderungen an die Qualität dieser Nietverbindungen gestellt. Insbesondere sind Nietkopfüberstände oder durch den Nietvorgang verursachte Beschädigungen an dem Bauteil zu vermeiden. Diese und andere Fehlstellen können insbesondere dann entstehen, wenn der Niet hinsichtlich seiner Maße nicht zu der Bohrung passt, in welche er gesetzt werden soll.

Um bereits vor dem Herstellen der Nietverbindung beurteilen zu können, ob ein zu verwendender Niet hinsichtlich seiner Toleranzen und Chargenabweichungen für das Setzen in eine ebenso toleranzbehaftete Bohrung geeignet ist, wird eine Vermessung der Bohrung und insbesondere des Senkungsdurchmessers vorgenommen. Durch einen Vergleich der Bohrung mit dem Niet kann dann entschieden werden, ob dieser spezielle Niet für diese spezielle Bohrung verwendet werden soll.

Aus der DE 10 2005 048 325 A1 ist es bekannt, einen Niet in dem Nietfinger eines Nietkopfes optisch zu prüfen. Dabei wird hier der Niet durch sein Reflektionsverhalten hinsichtlich seines Oberflächenschutzes untersucht. Nachteilig an diesem Ansatz ist aber, dass die Prüfung der Nietgeometrie im Nietkopf nicht oder nur unzureichend möglich ist. Denn durch die Führung des Niets im Nietfinger werden regelmäßig zu prüfende Bereiche des Niets, so etwa am Übergang zwischen Senkung und Schaft oder am gesamten oberen Teil des Schafts verdeckt, sodass im Ergebnis eine optische Prüfung im Nietfinger nicht hinreichend genau möglich ist.

Aus der US 4,823,396 (Basis für den Oberbegriff der Ansprüche 1 und 15), DE 10 2005 048 325 A1, DE 39 17 310 A1, der DE 202 15 364 U1 oder der DE 10 2007 061 803 B3 sind weitere Vorrichtungen zum Prüfen von Nieten bekannt.

Ausgehend von diesem Stand der Technik besteht die Aufgabe der Erfindung darin, die Möglichkeit der Prüfung eines Niets vor der Verwendung in einer Nietmaschine hinsichtlich seiner Eignung für eine bestimmte Bohrung im Hinblick auf Genauigkeit und Geschwindigkeit weiterzuentwickeln und zu verbessern.

Bezogen auf ein Verfahren zum Prüfen eines Niets gemäß dem Oberbegriff von Anspruch 1 wird diese Aufgabe durch die Merkmale des kennzeichnenden Teils von Anspruch 1 gelöst. Bezogen auf eine Messanordnung zum Prüfen eines Niets gemäß dem Oberbegriff von Anspruch 15 wird diese Aufgabe durch die Merkmale des kennzeichnenden Teils von Anspruch 15 gelöst.

Wesentlich für die Erfindung ist die Erkenntnis, dass die Prüfung des Niets auf der Transportstrecke zur Nietmaschine vorgenommen werden kann, also noch bevor der Niet in den Nietkopf aufgenommen wurde. Auf dieser Transportstrecke kann eine entsprechende Messung vorgesehen werden, ohne entweder an der Nietbefüllstation oder an der Nietmaschine eine konstruktive Änderung vornehmen zu müssen. Ebenso ist hier eine Führung des Niets möglich, welche ohne die Hindernisse zur optischen Erfassung wie im Nietkopf selbst auskommt. Schließlich kann die Vermessung des Niets durchgeführt werden, ohne die Arbeit der Nietmaschine oder der Nietbefüllstation zu verzögern, sodass eine Online-Vermessung des Niets ohne Reduzierung der Taktzeiten der Bearbeitung am Bauteil möglich wird. Im Ergebnis wird eine berührungslose und ebenso schnelle wie genaue Messung des Niets erreicht.

Erfindungsgemäß stellt ein Transportschlauch die Transportstrecke bereit. Ein solcher Transportschlauch ist dazu geeignet, einen Prüfabschnitt zur Vermessung des Niets bereitzustellen.

Der Unteranspruch 2 spezifiziert besonders relevante geometrische Eigenschaften des zu vermessenden Niets.

Die bevorzugten Ausgestaltungen der Unteransprüche 4 und 5 sehen vor, dass bei Einhaltung der Toleranzkriterien der Niet zur Nietmaschine weiterbefördert wird, hingegen bei Überschreiten der Toleranzkriterien der Niet in eine Aussonderungsposition befördert wird.

Die bevorzugte Ausgestaltung des Unteranspruchs 7 beschreibt eine bevorzugte Ausgestaltung eines Prüfabschnitts des Transportschlauchs. Die Unteransprüche 8 bis 11 betreffen ein bevorzugtes optisches Erfassungssystem zur Vermessung des Niets.

Weitere Einzelheiten, Merkmale, Ziele und Vorteile der vorliegenden Erfindung werden nachfolgend anhand einer lediglich Ausführungsbeispiele zeigenden Zeichnung erläutert. In der Zeichnung zeigt
- Fig. 1: eine schematische Ansicht einer Nietanordnung zum Herstellen von Nietverbindungen an Strukturbauteilen zur Ausführung des vorschlagsgemäßen Verfahrens,
- Fig. 2: zwei Ansichten eines ersten Ausführungsbeispiels einer Prüfanordnung und einer Messkammer für das vorschlagsgemäße Verfahren,
- Fig. 3: zwei Ansichten eines zweiten Ausführungsbeispiels einer Prüfanordnung und einer Messkammer für das vorschlagsgemäße Verfahren und
- Fig. 4a-b): jeweils einen Niet und eine entsprechende Bohrung zum Einbringen des Niets zur Anwendung des vorschlagsgemäßen Verfahrens.

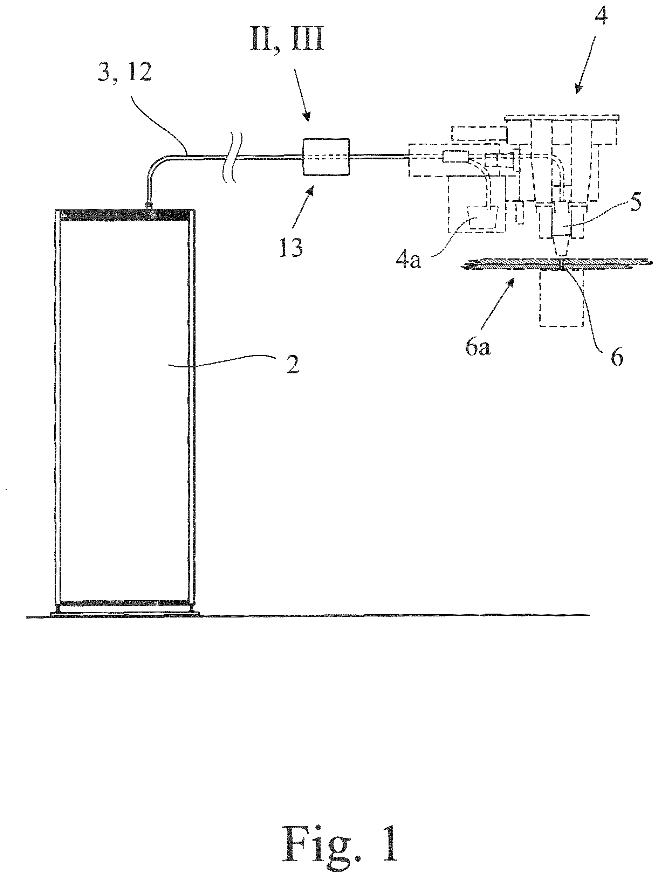

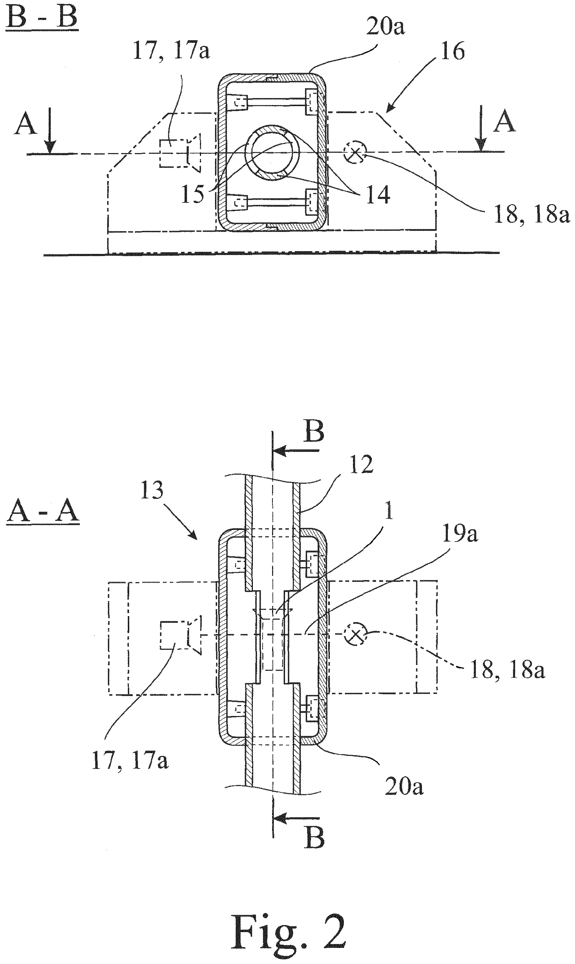

Die in der Fig. 1 dargestellte Nietanordnung ist eingerichtet zum Herstellen von Nietverbindungen an Strukturbauteilen, hier insbesondere an Strukturbauteilen eines Rumpfes oder eines Flügels für ein Flugzeug. Das vorschlagsgemäße Verfahren dient zum Prüfen eines Niets 1, wobei der Niet 1 von einer Nietbefüllstation 2 entlang einer Transportstrecke 3 in Richtung einer Nietmaschine 4 während eines Betriebs der Nietmaschine 4 befördert wird. Der in der Fig. 1 nicht dargestellte Niet 1 ist in den Fig. 2, 3 und 4a erkennbar. Die Beförderung des Niets 1 kann also erfolgen, ohne dass der Betrieb der Nietmaschine 4 unterbrochen werden muss.

Bei der Nietbefüllstation 2 kann es sich um eine prinzipiell beliebige Vorrichtung handeln, welche aus einem Vorrat an Nieten einen Niet 1 zum Transport entlang der Transportstrecke 3 bereitstellt. Regelmäßig weist die Nietbefüllstation 2 mehrere Nietbehälter mit jeweils unterschiedlichen Nietarten auf, welche zum Transport entlang der Transportstrecke 3 bereitgestellt werden können. Es können auch mehrere Nietbefüllstationen 2 so angeordnet sein, dass der von ihnen jeweils bereitgestellte Niet 1 zumindest abschnittsweise über eine gemeinsame Transportstrecke 3 in Richtung der Nietmaschine 4 befördert wird. Ferner kann die Nietbefüllstation 2 auch eine - hier nicht gezeigte - Vereinzelungsvorrichtung und eine - ebenfalls hier nicht dargestellte - Antriebsvorrichtung für den Niet 1 auf der Transportstrecke 3 aufweisen. Die Antriebsvorrichtung ist druckluftbasiert, wie dies regelmäßig der Fall ist.

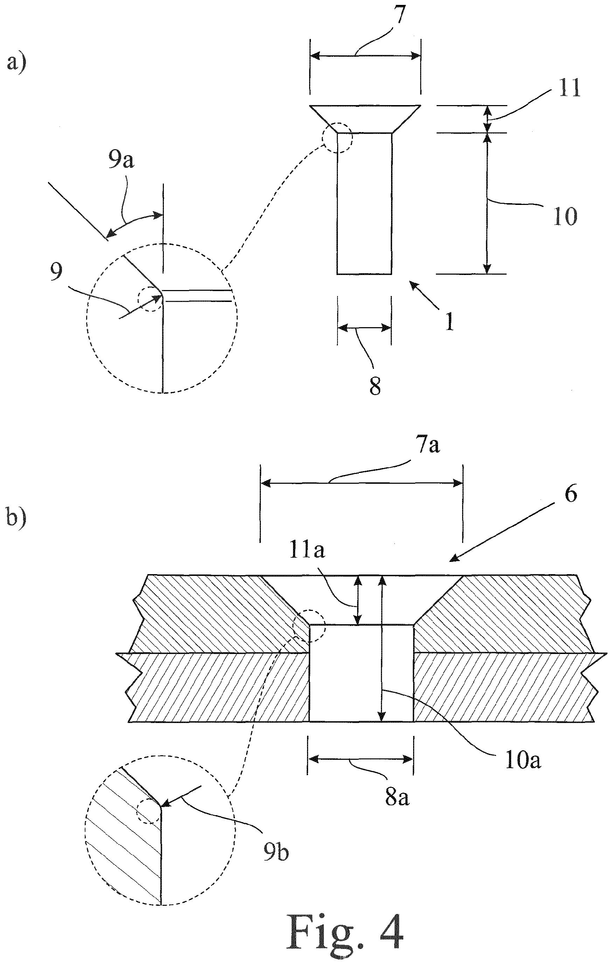

Die Nietmaschine 4 weist einen Nietkopf 5, in welchem der Niet 1 aufgenommen wird, bevor er in das Loch der Bohrung 6 - schematisch dargestellt in der Fig. 4b - in dem Bauteil 6a eingesetzt und umgeformt wird.

Gemäß dem vorgeschlagenen Verfahren wird der Niet 1 auf der Transportstrecke 3 zur Bestimmung einer Nietgeometrie des Niets 1 vermessen.

Die Bestimmung der Nietgeometrie des Niets 1 kann sich auf eine einzelne geometrische Eigenschaft des Niets 1 beschränken oder mehrere solcher geometrischen Eigenschaften betreffen. Insbesondere ist unter einer solchen Nietgeometrie jedwede Ausdehnung des Niets 1 in beliebiger Richtung und/oder ein beliebiger Winkel einer Oberfläche oder Kontur des Niets 1 zu verstehen.

Erfindungsgemäß wird der Niet 1 durch ein optisches Messverfahren vermessen. wird. Bevorzugt wird dabei - als Beispiele für eine Nietgeometrie im obigen Sinne - ein Kopfdurchmesser 7, ein Schaftdurchmesser 8, ein Übergangsradius 9, einen Senkwinkel 9a, eine Schaftlänge 10 und/oder eine Kopflänge 11 des Niets 1 vermessen. Die entsprechenden Nietgeometrien sind in der Fig. 4a markiert. Eine bevorzugte Messgenauigkeit liegt etwa bei 3 bis 5 Mikrometern.

Weiter ist bevorzugt vorgesehen, dass die bestimmte Nietgeometrie des Niets 1 mit Geometrieparametern der Bohrung 6 auf die Einhaltung von Toleranzkriterien verglichen wird. Diese Geometrieparameter der Bohrung 6 können fest vorgegeben oder analytisch berechnet worden sein. Bevorzugt handelt es sich um gemessene und speziell an der Bohrung 6 gemessene Geometrieparameter.

Bezogen auf die oben genannte Nietgeometrie ist regelmäßig gewünscht, dass der Kopfdurchmesser 7 einem Senkdurchmesser 7a der Bohrung entspricht, dass der Schaftdurchmesser 8 kleiner als der Bohrungsdurchmesser 8a ist, dass der Übergangsradius 9 größer als der Bohrungsradius 9b zwischen Senkung und Bohrung ist, dass die Summe aus der Schaftlänge 10 und der Kopflänge 11 größer als die Klemmlänge 10a ist und dass die Kopflänge 11 der Senktiefe 11a entspricht. Die Toleranzkriterien können vorschreiben, inwiefern und mit welchen Toleranzen etwa einige oder alle dieser Anforderungen eingehalten werden sollen.

Bevorzugt ist vorgesehen, dass bei Einhaltung der Toleranzkriterien der Niet 1 zu der Nietmaschine 4 befördert wird und der Niet 1 durch die Nietmaschine 4 - speziell durch den Nietkopf 5 - in die Bohrung 6 an dem Bauteil eingesetzt sowie umgeformt wird. Der Niet 1 kann also bei der Bohrung 6 verwendet werden.

Entsprechend ist ebenfalls bevorzugt vorgesehen, dass bei Überschreiten der Toleranzkriterien der Niet 1 in eine Aussonderungsposition befördert wird. In der Fig. 1 wird diese Aussonderungsposition beispielhaft durch einen Ausschussbehälter 4a dargestellt. Diese Beförderung in die Aussonderungsposition kann darin bestehen, dass der Niet 1 entweder - zumindest vorläufig - in den Ausschussbehälter 4a kommt oder dass der Niet 1 zurück in die Nietbefüllstation 2 geführt wird, sodass er später wieder bereitgestellt werden kann. Alternativ kann der Niet auch in einer Warteposition geparkt werden, in welcher er die Verarbeitung des nächsten Niets 1 aus der Nietbefüllstation 2 erlaubt und erst dann der Nietmaschine 4 zugeführt wird, wenn z. B. die aktuelle Bohrung 6 in ihren Geometrieparametern der Nietgeometrie dieses Niets 1 entspricht. Bis dahin kann der Niet 1 in der Aussonderungsposition verbleiben. Eine solche Überschreitung der Toleranzkriterien kann sich neben produktionsbedingten Abweichungen auch dadurch ergeben, dass Spananhaftungen an dem Niet 1 vorliegen oder der Niet 1 zu einer falschen Charge gehört.

Erfindungsgemäß und wie in der Fig. 1 dargestellt wird der Niet 1 durch eine Schlauchanordnung 12 von der Nietbefüllstation 2 in Richtung der Nietmaschine 4 transportiert. Hier weist die Schlauchanordnung 12 einen Prüfabschnitt 13 auf, durch welchen Prüfabschnitt 13 die Transportstrecke 3 führt, in welchem Prüfabschnitt 13 der Niet 1 vermessen wird. Dabei ist es vorteilhaft, wenn der Niet 1 in dem Prüfabschnitt 13 für eine Messdauer in seinem Transport angehalten wird. Die eigentliche Messung kann dann also mit einem stationären Niet 1 stattfinden. Der Niet 1 wird - wie bereits erwähnt - durch Druckluft in der Schlauchanordnung 12 angetrieben. Der - hier in seinem Mechanismus nicht dargestellte - Vorgang des Anhaltens in dem Prüfabschnitt 13 und der neuerlichen Bewegung kann dann im Prinzip auf beliebige Art und Weise bewirkt werden. Sofern die Transportstrecke 3 der Beförderung eines jeweiligen Niets 1 von mehreren Nietbefüllstationen 2 dient und eine Zusammenführung von jeweiligen Einzeltransportstrecken aufweist, so ist der Prüfabschnitt 13 bevorzugt nach einer solchen Zusammenführung angeordnet.

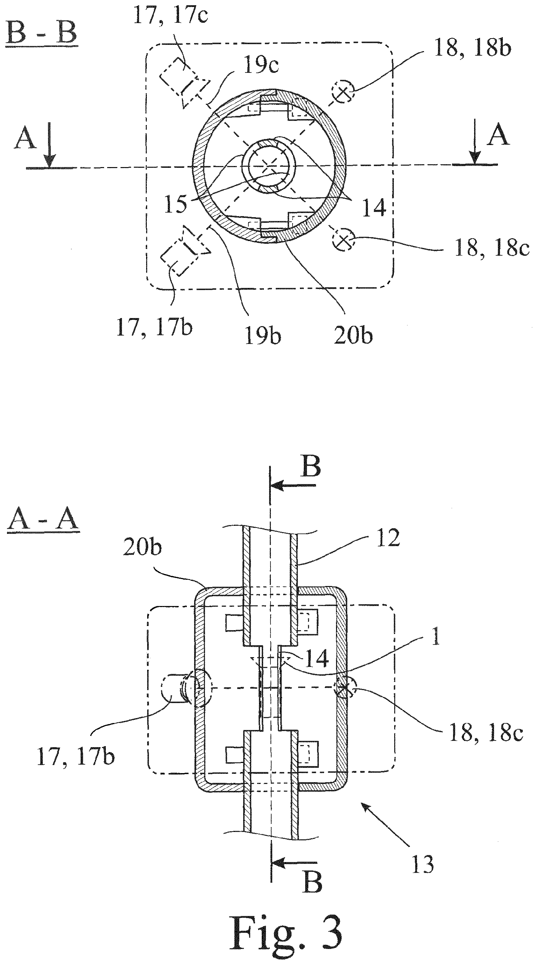

Um in dem Prüfabschnitt 13 sowohl eine ausreichende Führung als auch eine hinreichende optische Erfassbarkeit des Niets 1 zu gewährleisten, ist bevorzugt vorgesehen, dass die Schlauchanordnung 12 in dem Prüfabschnitt 13 Stege 14 zum Führen des Niets 1 entlang der Transportstrecke 3 und zwischen den Stegen 14 angeordnete Schlitze 15 zur Vermessung des Niets 1 aufweist. Die Schlitze 15 dienen insoweit der Vermessung des Niets 1, als dass sie - als Ausnehmung in dem Material der Schlauchanordnung 12 - eine optische Erfassung des Niets 1 nicht beeinträchtigen. Bevorzugt ist weiter, dass die Schlitze 15 - wie aus den Fig. 2 und 3 erkennbar - im Wesentlichen gegenüberliegend bezogen auf die Transportstrecke 3 angeordnet sind.

Bevorzugt erfolgt die Vermessung dadurch, dass der Niet 1 speziell durch eine dem Prüfabschnitt 13 zugeordnete Prüfanordnung 16 vermessen wird, wobei eine Beleuchtungsanordnung 17 der Prüfanordnung 16 den Niet 1 beleuchtet und eine Kameraanordnung 18 der Prüfanordnung 16 den Niet 1 erfasst. Speziell und wie in den Fig. 2 und 3 dargestellt kann die Kameraanordnung 18 eine Hinterleuchtung des Niets 1 durch die Beleuchtungsanordnung 17 erfassen. Dieses Prinzip wird auch als Durchsicht-Beleuchtung bezeichnet.

Grundsätzlich kann es vorgesehen sein, dass die Kameraanordnung 18 den Niet 1 aus einer Sichtrichtung 19a erfasst. Dies gilt etwa für das Ausführungsbeispiel der Fig. 2, gemäß welchem eine einzelne Leuchtquelle 17a der Beleuchtungsanordnung 17 gegenüberliegend zu einer einzelnen Kamera 18a der Kameraanordnung 18 angeordnet ist.

Um die Nietgeometrie hinreichend genau bestimmen zu können, ist jedoch bevorzugt vorgesehen, dass die Kameraanordnung 18 den Niet 1 dreidimensional erfasst. Dies kann dadurch geschehen, dass die Kameraanordnung 18 - wie in der Fig. 3 dargestellt - den Niet 1 aus mindestens zwei Sichtrichtungen 19a, b erfasst. Hier bietet es sich vorteilhafterweise an, dass diese zwei Sichtrichtungen 19a, b im Wesentlichen orthogonal zueinander ausgerichtet sind, wie ebenfalls in der Fig. 3 dargestellt ist. Speziell im Ausführungsbeispiel der Fig. 3 sind zwei Leuchtquellen 17b, c der Leuchtanordnung 17 vorgesehen, denen jeweils eine Kamera 18b, c der Kameraanordnung 18 zugeordnet ist.

Insbesondere eine unerkannte Neigungslage des Niets 1 kann Fehler bei der Bestimmung der Nietgeometrie verursachen. Um dies zu vermeiden, ist bevorzugt vorgesehen, dass die Kameraanordnung 18 eine Neigungslage des Niets 1 erfasst. Damit können insbesondere eine basierend auf der erfassten Neigungslage gemessene Nietgeometrie und vor allem eine Schaftlänge 10 und eine Kopflänge 11 korrigiert werden.

Speziell hinsichtlich der Prüfanordnung 16 ist es von Vorteil, wenn die Beleuchtungsanordnung 17 bezogen auf den Niet 1 im Wesentlichen gegenüberliegend zu der Kameraanordnung 18 angeordnet ist. Sofern die Beleuchtungsanordnung 17 mehrere Leuchtquellen 17b, c und entsprechende Kameras 18b, c aufweist, gilt diese gegenüberliegende Anordnung vorzugsweise für jede einzelne Leuchtquelle 17b, c und der ihr zugeordneten jeweiligen Kamera 18b, c, was ebenfalls in der Fig. 3 dargestellt ist. Für eine besonders genaue Erfassung des Niets 1 kann dabei bevorzugt vorgesehen sein, dass die Beleuchtungsanordnung 17 oder die Kameraanordnung 18 jeweils ein telezentrisches Objektiv zur Vermessung des Niets 1 aufweisen. Wenn - wie bevorzugt - sowohl die Beleuchtungsanordnung 17 als auch die Kameraanordnung 18 jeweils ein telezentrisches Objektiv aufweisen, wird die Prüfanordnung 16 gegenüber einer Verschiebung des Niets 16 zwischen der Beleuchtungsanordnung 17 und der Kameraanordnung 18 unempfindlicher, sodass eine noch genauere Messung ermöglicht wird.

Es wurde bereits hingewiesen, dass einerseits der Niet 1 in der Schlauchanordnung 12 durch Druckluft angetrieben wird und andererseits in dem Prüfabschnitt Schlitze 15 in der Schlauchanordnung 12 vorgesehen sein können. Damit diese Schlitze 15 den Antrieb des Niets 1 nicht beeinträchtigen, ist vorgesehen, dass die Messkammer 20a, b - jeweils dargestellt in der Fig. 2 und 3 - zum luftdichten Abschluss um den Prüfabschnitt 13 angeordnet ist. Vorzugsweise ist die Messkammer 20a, b zur Beleuchtung des Niets 1 durch die Beleuchtungsanordnung 17 und zur Erfassung des Niets 1 durch die Kameraanordnung 18 eingerichtet.

Das kann einerseits dadurch gewährleistet sein, dass - gemäß den dargestellten Ausführungsbeispielen der Fig. 2 und 3 - die Messkammer 20a, b zumindest teilweise transparent ausgestaltet ist und die Kameraanordnung 18 und/oder die Beleuchtungsanordnung 17 außerhalb der Messkammer 20a, b angeordnet sind. Damit erlauben durchsichtige Teile der Messkammer 20a, b - wobei dies auch im Wesentlichen für die gesamte Messkammer 20a, b gelten kann - den Eintritt in die Messkammer 20a, b des von der Beleuchtungsanordnung 17 ausgestrahlten Lichts sowie den Austritt aus der Messkammer 20a, b des dann von der Kameraanordnung 18 erfassten Lichts.

Andererseits kann gemäß einer hier nicht dargestellten Variante auch die Kameraanordnung 18 und/oder die Beleuchtungsanordnung 17 zumindest teilweise innerhalb der Messkammer 20a, b angeordnet sein, wodurch die zumindest teilweise transparente Ausgestaltung der Messkammer 20a, b entbehrlich werden kann.

Gemäß der vorgeschlagenen Messanordnung zum Prüfen eines Niets 1 zur Bestimmung einer Nietgeometrie weist die Messanordnung eine Schlauchanordnung 12 zur Beförderung des Niets 1 entlang einer Transportstrecke 3 auf, welche Schlauchanordnung 12 einen Prüfabschnitt 13 aufweist und durch welchen Prüfabschnitt 13 die Transportstrecke 3 führt. Die vorschlagsgemäße Messanordnung weist ferner eine Messkammer 20a, b, welche Messkammer 20a, b zum luftdichten Abschluss um den Prüfabschnitt 13 angeordnet ist, und eine dem Prüfabschnitt 13 zugeordnete Prüfanordnung 16 zur Vermessung des Niets 1 auf.

Weitere bevorzugte Ausgestaltungen der vorschlagsgemäßen Messkammer ergeben sich aus den obigen bevorzugten Ausgestaltungen des vorschlagsgemäßen Verfahrens bzw. den für das Verfahren relevanten und bevorzugten Merkmalen.

## Patentansprüche

1. Verfahren zum Prüfen eines Niets (1), wobei der Niet (1) von einer Nietbefüllstation (2) entlang einer Transportstrecke (3) in Richtung einer Nietmaschine (4) während eines Betriebs der Nietmaschine (4) befördert wird,
wobei der Niet (1) auf der Transportstrecke (3) zur Bestimmung einer Nietgeometrie des Niets (1) vermessen wird,
wobei der Niet (1) durch eine Schlauchanordnung (12) von der Nietbefüllstation (2) in Richtung der Nietmaschine (4) transportiert wird,
wobei der Niet (1) durch Druckluft in der Schlauchanordnung (12) angetrieben wird,
**dadurch gekennzeichnet,**
**dass** ein Transportschlauch die Transportstrecke bereitstellt,
**dass** die Schlauchanordnung (12) einen Prüfabschnitt (13) aufweist, durch welchen die Transportstrecke (3) führt, in welchem Prüfabschnitt (13) der Niet (1) durch ein optisches Messverfahren vermessen wird,
und **dass** eine Messkammer (20a, b) zum luftdichten Abschluss um den Prüfabschnitt (13) angeordnet ist.

2. Verfahren nach Anspruch 1, **dadurch gekennzeichnet, dass** ein Kopfdurchmesser (7), ein Schaftdurchmesser (8), ein Übergangsradius (9), eine Schaftlänge (10) und/oder eine Kopflänge (11) des Niets (1) vermessen wird.

3. Verfahren nach Anspruch 1 oder 2, **dadurch gekennzeichnet, dass** die bestimmte Nietgeometrie des Niets (1) mit, vorzugsweise gemessenen, Geometrieparametern der Bohrung (6) auf die Einhaltung von Toleranzkriterien verglichen wird.

4. Verfahren nach Anspruch 3, **dadurch gekennzeichnet, dass** bei Einhaltung der Toleranzkriterien der Niet (1) zu der Nietmaschine (4) befördert wird und der Niet durch die Nietmaschine in eine Bohrung (6) an dem Bauteil (6a) eingesetzt sowie umgeformt wird.

5. Verfahren nach einem der Ansprüche 3 bis 4, **dadurch gekennzeichnet, dass** bei Überschreiten der Toleranzkriterien der Niet (1) in eine Aussonderungsposition befördert wird.

6. Verfahren nach einem der Ansprüche 1 bis 5, **dadurch gekennzeichnet, dass** der Niet (1) in dem Prüfabschnitt (13) für eine Messdauer in seinem Transport angehalten wird.

7. Verfahren nach einem der Ansprüche 1 bis 6, **dadurch gekennzeichnet, dass** die Schlauchanordnung (12) in dem Prüfabschnitt (13) Stege (14) zum Führen des Niets (1) entlang der Transportstrecke (3) sowie zwischen den Stegen (14) angeordnete Schlitze (15) zur Vermessung des Niets (1) aufweist, vorzugsweise, dass die Schlitze (15) im Wesentlichen gegenüberliegend bezogen auf die Transportstrecke (3) angeordnet sind.

8. Verfahren nach einem der Ansprüche 1 bis 7, **dadurch gekennzeichnet, dass** der Niet (1) durch eine dem Prüfabschnitt (13) zugeordnete Prüfanordnung (16) vermessen wird, wobei eine Beleuchtungsanordnung (17) der Prüfanordnung (16) den Niet (1) beleuchtet und eine Kameraanordnung (18) der Prüfanordnung (16) den Niet (1) erfasst, insbesondere, eine Hinterleuchtung des Niets (1) durch die Beleuchtungsanordnung (17) erfasst.

9. Verfahren nach Anspruch 8, **dadurch gekennzeichnet, dass** die Kameraanordnung (18) den Niet (1) dreidimensional erfasst, vorzugsweise, dass die Kameraanordnung (18) den Niet (1) aus mindestens zwei Sichtrichtungen (19a, b) erfasst, insbesondere, dass die zwei Sichtrichtungen (19a, b) im Wesentlichen orthogonal zueinander ausgerichtet sind.

10. Verfahren nach Anspruch 8 oder 9, **dadurch gekennzeichnet, dass** die Kameraanordnung (18) eine Neigungslage des Niets (1) erfasst, vorzugsweise, dass eine basierend auf der erfassten Neigungslage gemessene Nietgeometrie, insbesondere eine Schaftlänge (10) und eine Kopflänge (11), korrigiert werden.

11. Verfahren nach einem der Ansprüche 8 bis 10, **dadurch gekennzeichnet, dass** die Beleuchtungsanordnung (17) bezogen auf den Niet (1) im Wesentlichen gegenüberliegend zu der Kameraanordnung (18) angeordnet ist, vorzugsweise, dass die Beleuchtungsanordnung (17) und/oder die Kameraanordnung (18) jeweils ein telezentrisches Objektiv zur Vermessung des Niets (1) aufweist.

12. Verfahren nach einem der Anspruch 6 bis 11, **dadurch gekennzeichnet, dass** die Messkammer (20a, b) zur Beleuchtung des Niets (1) durch die Beleuchtungsanordnung (17) und zur Erfassung des Niets (1) durch die Kameraanordnung (18) eingerichtet ist.

13. Verfahren nach einem der Ansprüche 1 bis 12, **dadurch gekennzeichnet, dass** die Messkammer (20a, b) zumindest teilweise transparent ausgestaltet ist sowie die Kameraanordnung (18) und/oder die Beleuchtungsanordnung (17) außerhalb der Messkammer (20a, b) angeordnet sind.

14. Verfahren nach einem der Ansprüche 1 bis 13, **dadurch gekennzeichnet, dass** die Kameraanordnung (18) und/oder die Beleuchtungsanordnung (17) zumindest teilweise innerhalb der Messkammer (20a, b) angeordnet sind.

15. Messanordnung zum Prüfen eines Niets (1) zur Bestimmung einer Nietgeometrie nach einem Verfahren gemäß einem der vorhergehenden Ansprüche, wobei die Messanordnung eine Schlauchanordnung (12) zur Beförderung des Niets (1) entlang einer Transportstrecke (3) aufweist, wobei der Niet (1) durch Druckluft in der Schlauchanordnung (12) angetrieben wird,
**dadurch gekennzeichnet,**
**dass** ein Transportschlauch die Transportstrecke bereitstellt,
**dass** die Schlauchanordnung (12) einen Prüfabschnitt (13) aufweist und durch welchen Prüfabschnitt (13) die Transportstrecke (3) führt, wobei die Messanordnung eine Messkammer (20a, b) aufweist, welche Messkammer (20a, b) zum luftdichten Abschluss um den Prüfabschnitt angeordnet (13) ist, und wobei die Messanordnung eine dem Prüfabschnitt (13) zugeordnete Prüfanordnung (16) zur optischen Vermessung des Niets (1) aufweist.

## Claims

1. Method for testing a rivet (1), wherein the rivet (1) is conveyed from a rivet filling station (2) along a transport section (3) in the direction of a riveting machine (4) during operation of the riveting machine (4);
wherein on the transport section (3) the rivet (1) is measured so as to determine a rivet geometry of the rivet (1);
wherein the rivet (1) is transported from the rivet filling station (2) through a hose assembly (12) in the direction of the riveting machine (4);
wherein the rivet (1) is driven in the hose assembly (12) by compressed air,
**characterized in that**
a transport hose provides the transport section;
the hose assembly (12) has a testing portion (13), the transport section (3) leading through the latter, and the rivet (1) being measured by an optical measuring method in said testing portion (13); and
a measuring chamber (20a, b) for the air-tight enclosure is disposed about the testing portion (13) .

2. Method according to Claim 1, **characterized in that** a head diameter (7), a shank diameter (8), a transition radius (9), a shank length (10) and/or a head length (11) of the rivet (1) is/are measured.

3. Method according to Claim 1 or 2, **characterized in that** the determined rivet geometry of the rivet (1) in terms of complying with tolerance criteria is compared with, preferably measured, geometry parameters of the bore (6).

4. Method according to Claim 3, **characterized in that**, if the tolerance criteria are complied with, the rivet (1) is conveyed to the riveting machine (4) and the rivet is inserted by the riveting machine into a bore (6) on the component (6a) as well as reshaped.

5. Method according to one of Claims 3 to 4, **characterized in that**, if the tolerance criteria are exceeded, the rivet (1) is conveyed to a rejection position.

6. Method according to one of Claims 1 to 5, **characterized in that** the rivet (1) is stopped in its transport for a measurement time in the testing portion (13).

7. Method according to one of Claims 1 to 6, **characterized in that** the hose assembly (12) in the testing portion (13) has webs (14) for guiding the rivet (1) along the transport section (3), as well as slots (15), disposed between the webs (14), for measuring the rivet (1), preferably **in that** the slots (15) are disposed so as to be substantially opposite one another with respect to the transport section (3).

8. Method according to one of Claims 1 to 7, **characterized in that** the rivet (1) is measured by a test assembly (16) assigned to the testing portion (13), wherein an illumination assembly (17) of the test assembly (16) illuminates the rivet (1), and a camera assembly (18) of the test assembly (16) records the rivet (1), in particular records a background illumination of the rivet (1) by the illumination assembly (17).

9. Method according to Claim 8, **characterized in that** the camera assembly (18) takes a three-dimensional recording of the rivet (1), preferably **in that** the camera assembly (18) records the rivet (1) from at least two viewing directions (19a, b), in particular in that the viewing directions (19a, b) are aligned so as to be substantially mutually orthogonal.

10. Method according to Claim 8 or 9, **characterized in that** the camera assembly (18) records an inclined position of the rivet (1), preferably **in that** a rivet geometry, in particular a shank length (10) and a head length (11), measured on the basis of the recorded inclined position, are corrected.

11. Method according to one of Claims 8 to 10, **characterized in that** the illumination assembly (17) is disposed so as to be substantially opposite the camera assembly (18) with respect to the rivet (1), preferably **in that** the illumination assembly (17) and/or the camera assembly (18) have/has in each case one telecentric lens for measuring the rivet (1) .

12. Method according to one of Claims 6 to 11, **characterized in that** the measuring chamber (20a, b) is specified to illuminate the rivet (1) by the illumination assembly (17) and to record the rivet (1) by the camera assembly (18).

13. Method according to one of Claims 1 to 12, **characterized in that** the measuring chamber (20a, b) is designed to be at least partially transparent, and the camera assembly (18) and/or the illumination assembly (17) are/is disposed outside the measuring chamber (20a, b).

14. Method according to one of Claims 1 to 13, **characterized in that** the camera assembly (18) and/or the illumination assembly (17) are/is at least partially disposed within the measuring chamber (20a, b).

15. Measurement assembly for testing a rivet (1) for determining a rivet geometry according to a method according to one of the preceding claims, wherein the measurement assembly has a hose assembly (12) for conveying the rivet (1) along a transport section (3), wherein the rivet (1) is driven in the hose assembly (12) by compressed air,
**characterized in that**
the transport hose provides the transport section;
the hose assembly (12) has a testing portion (13), the transport section (3) leading through the latter;
wherein the measurement assembly has a measuring chamber (20a, b), the measuring chamber (20a, b) for the air-tight enclosure being disposed about the testing portion (13); and
wherein the measurement assembly has a test assembly (16), assigned to the testing portion (12), for optically measuring the rivet (1).

## Revendications

1. Procédé de contrôle d'un rivet (1), le rivet (1) étant acheminé à partir d'une station de chargement de rivets (2) le long d'une voie de transport (3) en direction d'une riveteuse (4) pendant un fonctionnement de la riveteuse (4),
le rivet (1) étant mesuré sur la voie de transport (3) pour la détermination d'une géométrie du rivet (1),
le rivet (1) étant transporté par un ensemble formant tube (12) à partir de la station de chargement de rivets (2) en direction de la riveteuse (4),
le rivet (1) étant entraîné par de l'air comprimé dans l'ensemble formant tube (12),
**caractérisé**
**en ce qu'**un tube de transport fournit la voie de transport,
**en ce que** l'ensemble formant tube (12) présente une partie de contrôle (13) à travers laquelle passe la voie de transport (3), partie de contrôle (13) dans laquelle le rivet (1) est mesuré par un procédé de mesure optique, et en ce qu'une chambre de mesure (20a, b) est disposée autour de la partie de contrôle (13) pour la fermeture étanche à l'air.

2. Procédé selon la revendication 1, **caractérisé en ce qu'**un diamètre de tête (7), un diamètre de tige (8), un rayon de transition (9), une longueur de tige (10) et/ou une longueur de tête (11) du rivet (1) sont mesurés.

3. Procédé selon la revendication 1 ou 2, **caractérisé en ce que** la géométrie déterminée du rivet (1) est comparée à des paramètres de géométrie, de préférence mesurés, de l'alésage (6) en termes de conformité à des critères de tolérances.

4. Procédé selon la revendication 3, **caractérisé en ce qu'**en cas de conformité aux critères de tolérances, le rivet (1) est acheminé jusqu'à la riveteuse (4) et le rivet est inséré par le biais de la riveteuse dans un alésage (6) sur la pièce (6a) et est déformé.

5. Procédé selon l'une des revendications 3 à 4, **caractérisé en ce qu'**en cas de dépassement des critères de tolérances, le rivet (1) est acheminé dans une position d'élimination.

6. Procédé selon l'une des revendications 1 à 5, **caractérisé en ce que** le rivet (1) est arrêté dans son transport dans la partie de contrôle (13) pendant une durée de mesure.

7. Procédé selon l'une des revendications 1 à 6, **caractérisé en ce que** l'ensemble formant tube (12) présente dans la partie de contrôle (13) des nervures (14) servant au guidage du rivet (1) le long de la voie de transport (3) ainsi que des fentes (15) disposées entre les nervures (14) pour la mesure du rivet (1), de préférence **en ce que** les fentes (15) sont disposées sensiblement de manière opposée par rapport à la voie de transport (3).

8. Procédé selon l'une des revendications 1 à 7, **caractérisé en ce que** le rivet (1) est mesuré par un ensemble de contrôle (16) associé à la partie de contrôle (13), un ensemble d'éclairage (17) de l'ensemble de contrôle (16) éclairant le rivet (1) et un ensemble formant caméra (18) de l'ensemble de contrôle (16) détectant le rivet (1), en particulier détectant un rétro-éclairage du rivet (1) par le biais de l'ensemble d'éclairage (17).

9. Procédé selon la revendication 8, **caractérisé en ce que** l'ensemble formant caméra (18) détecte le rivet (1) de manière tridimensionnelle, de préférence **en ce que** l'ensemble formant caméra (18) détecte le rivet (1) à partir d'au moins deux directions de visualisation (19a, b), en particulier **en ce que** les deux directions de visualisation (19a, b) sont orientées sensiblement de manière orthogonale l'une par rapport à l'autre.

10. Procédé selon la revendication 8 ou 9, **caractérisé en ce que** l'ensemble formant caméra (18) détecte une position d'inclinaison du rivet (1), de préférence **en ce qu'**une géométrie de rivet mesurée sur la base de la position d'inclinaison détectée, en particulier une longueur de tige (10) et une longueur de tête (11), sont corrigées.

11. Procédé selon l'une des revendications 8 à 10, **caractérisé en ce que** l'ensemble d'éclairage (17) est disposé sensiblement en regard de l'ensemble formant caméra (18) par rapport au rivet (1), de préférence **en ce que** l'ensemble d'éclairage (17) et/ou l'ensemble formant caméra (18) présente(nt) respectivement un objectif télécentrique servant à la mesure du rivet (1).

12. Procédé selon l'une des revendications 6 à 11, **caractérisé en ce que** la chambre de mesure (20a, b) est conçue pour l'éclairage du rivet (1) par le biais de l'ensemble d'éclairage (17) et pour la détection du rivet (1) par le biais de l'ensemble formant caméra (18).

13. Procédé selon l'une des revendications 1 à 12, **caractérisé en ce que** la chambre de mesure (20a, b) est configurée au moins partiellement de manière transparente et l'ensemble formant caméra (18) et/ou l'ensemble d'éclairage (17) est/sont disposé(s) à l'extérieur de la chambre de mesure (20a, b).

14. Procédé selon l'une des revendications 1 à 13, **caractérisé en ce que** l'ensemble formant caméra (18) et/ou l'ensemble d'éclairage (17) est/sont disposé(s) au moins partiellement à l'intérieur de la chambre de mesure (20a, b).

15. Ensemble de mesure servant au contrôle d'un rivet (1) pour la détermination d'une géométrie de rivet selon un procédé conformément à l'une des revendications précédentes, l'ensemble de mesure présentant un ensemble formant tube (12) servant à l'acheminement du rivet (1) le long d'une voie de transport (3), le rivet (1) étant entraîné par de l'air comprimé dans l'ensemble formant tube (12),
**caractérisé**
**en ce qu'**un tube de transport fournit la voie de transport,
**en ce que** l'ensemble formant tube (12) présente une partie de contrôle (13), partie de contrôle (13) à travers laquelle passe la voie de transport (3), l'ensemble de mesure présentant une chambre de mesure (20a, b), laquelle chambre de mesure (20a, b) est disposée autour de la partie de contrôle (13) pour la fermeture étanche à l'air, et l'ensemble de mesure présentant un ensemble de contrôle (16) associé à la partie de contrôle (13) pour la mesure optique du rivet (1) .
